# EUROPEAN PATENT APPLICATION

(11) **EP 1 338 958 A1**
(43) Date of publication of application: **27.08.2003**
(21) Application number: 02003538.2
(22) Date of filing: 15.02.2002
(51) Int. Cl.: G06F 9/44, G06F 9/46

(54) **Calling java-class from C++ program**

(71) Applicant: SAP Aktiengesellschaft, 69190 Walldorf (DE)
(72) Inventor: Fuchs, Christian, 69168 Wiesloch (DE)

(57) **Abstract**

A computer program (100) has a C++ source file (110) and a C++ proxy class (120). When compiled, the program (200) is adapted to call a java class (220). For providing the program, a C++ proxy class (120) for the java class (220) is generated (410); the C++ proxy class (120) is related (420) to the C++ source file (110). Thereby, the C++ proxy class (120) is referenced (430) with a single identifier (112) in the C++ source file (110).

## Description

### Field of the Invention

The present invention generally relates to data processing and, more particularly, relates to computer systems, computer programs, and methods that use Java and C++ programming languages.

### Background of the Invention

The programming languages Java and C++ are similar: Both are object oriented; some Java instructions (e.g., keywords) are also C++ instructions with the same semantic.

C++ source code is compiled to object code (i.e. machine language) for direct execution by a processor (at run-time). Java source code is first compiled to so-called byte code and second, i.e. at run-time, the byte code is interpreted by a virtual machine.

In comparing the major advantages of C++ and Java, C++ is distinguished by performance speed and Java is distinguished by platform independence.

A huge number of components exist in both languages, but some components for a certain functionality exist only in a single language. It is sometimes desired to convert code from Java to C++ or vice versa. However, the components are not always portable.

Some programs use components in both languages. Briefly, in a first case, a first program has a majority of Java code that calls a minority of C++ code (e.g., for direct memory access). While the Java code remains platform independent, the C++ code is specially compiled for each platform. The Java code calls the C++ code, for example, via a Java Native Interface (JNI).

In a second case, a second program has a majority of C++ code that calls a minority of Java code.

In both cases, the majority language uses proxies for the minority language. In the first case, Java calls C++ by proxies; in the second case, C++ calls Java by proxies.

There is a need to provide system, program, and method that improve interoperation of the C++ and Java worlds.

### Brief Description of the Drawings

- FIG. 1: illustrates a simplified block diagram of a computer system;
- FIG. 2: illustrates an overview about code components provided by the present invention;
- FIG. 3: illustrates a simplified flow chart of a method according to the present invention;
- FIG. 4: illustrates an example of a prior art C++ program; and
- FIG. 5: illustrates an example of an inventive C++ program.

### Summary of the Invention

The present invention relates to a method for providing a computer-program-product for subsequent compiling, wherein the compiled product is adapted to call a java class. The method comprises the following steps: generating a C++ proxy class for the java class; relating the C++ proxy class to a C++ source file; and referencing the C++ proxy class with a single identifier in the C++ source file. Preferably, the single identifier is a single string. Preferably, in step referencing, the single identifier is derived from a namespace.

The present invention also relates to a computer-program-product with a plurality of instructions for controlling a processor that operates with a compiler and that provides object code, wherein the object code is able to call a java class. The computer-program-product comprises a C++ proxy class that has been generated for the java class; a C++ source file that has been related to the C++ proxy class; and a single identifier in the C++ source file that references to the C++ proxy class.

Preferably, the product is automatically provided by converting a conventional namespace identification to the single identifier, and adding the single identifier to the C++ proxy class and to the C++ source file.

The invention also relates to a system to provide the computer-program-product for subsequent compiling, wherein the compiled product is adapted to call a java class. The system comprises means to provide code for generating a C++ proxy class for the java class; means to provide code for relating the C++ proxy class to a C++ source file; and means to provide code for referencing the C++ proxy class with a single identifier in the C++ source file.

### Computer System in General

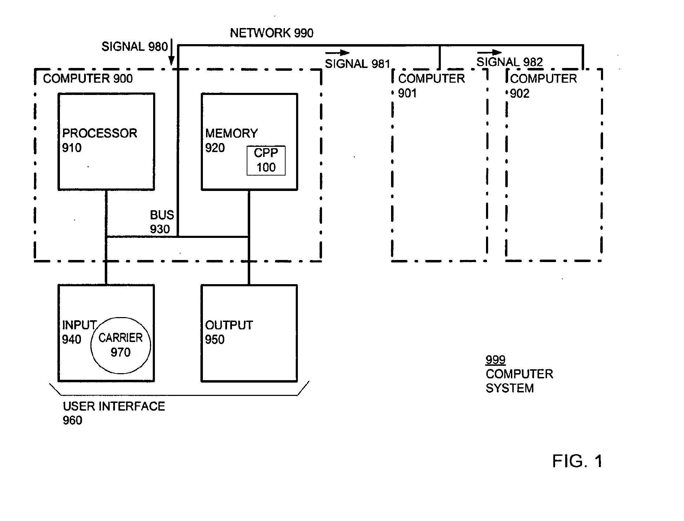

FIG. 1 illustrates a simplified block diagram of the inventive computer network system 999 having a plurality of computers 900, 901, 902 (or 90q, with q=0...Q-1, Q any number).

Computers 900-902 are coupled via inter-computer network 990. Computer 900 comprises processor 910, memory 920, bus 930, and, optionally, input device 940 and output device 950 (I/O devices, user interface 960). As illustrated, the invention is present by computer-program-product 100 (CPP), program carrier 970 and program signal 980, collectively "program".

In respect to computer 900, computer 901/902 is sometimes referred to as "remote computer", computer 901/902 is, for example, a server, a router, a peer device or other common network node, and typically comprises many or all of the elements described relative to computer 900. Hence, elements 100 and 910-980 in computer 900 collectively illustrate also corresponding elements 10q and 91q-98q (shown for q=0) in computers 90q.

Computer 900 is, for example, a conventional personal computer (PC), a desktop and hand-held device, a multiprocessor computer, a pen computer, a microprocessor-based or programmable consumer electronics, a minicomputer, a mainframe computer, a personal mobile computing device, a mobile phone, a portable or stationary personal computer, a palmtop computer or the like.

Processor 910 is, for example, a central processing unit (CPU), a micro-controller unit (MCU), digital signal processor (DSP), or the like.

Memory 920 symbolizes elements that temporarily or permanently store data and instructions. Although memory 920 is conveniently illustrated as part of computer 900, memory function can also be implemented in network 990, in computers 901/902 and in processor 910 itself (e.g., cache, register), or elsewhere. Memory 920 can be a read only memory (ROM), a random access memory (RAM), or a memory with other access options. Memory 920 is physically implemented by computer-readable media, such as, for example: (a) magnetic media, like a hard disk, a floppy disk, or other magnetic disk, a tape, a cassette tape; (b) optical media, like optical disk (CD-ROM, digital versatile disk - DVD); (c) semiconductor media, like DRAM, SRAM, EPROM, EEPROM, memory stick, or by any other media, like paper.

Optionally, memory 920 is distributed across different media. Portions of memory 920 can be removable or non-removable. For reading from media and for writing in media, computer 900 uses devices well known in the art such as, for example, disk drives, tape drives.

Memory 920 stores support modules such as, for example, a basic input output system (BIOS), an operating system (OS), a program library, a compiler, an interpreter, and a text- processing tool. Support modules are commercially available and can be installed on computer 900 by those of skill in the art. For simplicity, these modules are not illustrated.

CPP 100 comprises program instructions and - optionally - data that cause processor 910 to execute method steps of the present invention. Method steps are explained with more detail below. In other words, CPP 100 defines the operation of computer 900 and its interaction in network system 999. For example and without the intention to be limiting, CPP 100 can be available as source code in any programming language, and as object code ("binary code") in a compiled form. Persons of skill in the art can use CPP 100 in connection with any of the above support modules (e.g., compiler, interpreter, operating system).

Although CPP 100 is illustrated as being stored in memory 920, CPP 100 can be located elsewhere. CPP 100 can also be embodied in carrier 970. Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture comprising a computer readable medium having computer readable program code means embodied therein for executing the method of the present invention. Further, program signal 980 can also embody computer program 100. Signal 980 travels on network 990 to computer 900. Having described CPP 100, program carrier 970, and program signal 980 in connection with computer 900 is convenient. Optionally, program carrier 971/972 (not shown) and program signal 981/982 embody computer-program-product (CPP) 101/102 to be executed by processor 911/912 (not shown) in computers 901/902, respectively.

Input device 940 symbolizes a device that provides data and instructions for processing by computer 900. For example, device 940 is a keyboard, a pointing device (e.g., mouse, trackball, cursor direction keys), microphone, joystick, game pad, scanner, disk drive. Although the examples are devices with human interaction, device 940 can also operate without human interaction, such as, a wireless receiver (e.g., with satellite dish or terrestrial antenna), a sensor (e.g., a thermometer), a counter (e.g., goods counter in a factory). Input device 940 can serve to read carrier 970.

Output device 950 symbolizes a device that presents instructions and data that have been processed. For example, a monitor or a display, (cathode ray tube (CRT), flat panel display, liquid crystal display (LCD), speaker, printer, plotter, vibration alert device. Similar as above, output device 950 communicates with the user, but it can also communicate with further computers.

Input device 940 and output device 950 can be combined to a single device; any device 940 and 950 can be provided optional.

Bus 930 and network 990 provide logical and physical connections by conveying instruction and data signals. While connections inside computer 900 are conveniently referred to as "bus 930", connections between computers 900-902 are referred to as "network 990". Optionally, network 990 comprises gateways being computers that specialize in data transmission and protocol conversion. Devices 940 and 950 are coupled to computer 900 by bus 930 (as illustrated) or by network 990 (optional). While the signals inside computer 900 are mostly electrical signals, the signals in network are electrical, magnetic, optical or wireless (radio) signals. Networking environments (as network 990) are commonplace in offices, enterprise-wide computer networks, intranets and the internet (i.e. world wide web). The physical distance between a remote computer and computer 900 is not important. Network 990 can be a wired or a wireless network. To name a few network implementations, network 990 is, for example, a local area network (LAN), a wide area network (WAN), a public switched telephone network (PSTN); a Integrated Services Digital Network (ISDN), an infra-red (IR) link, a radio link, like Universal Mobile Telecommunications System (UMTS), Global System for Mobile Communication (GSM), Code Division Multiple Access (CDMA), or satellite link.

Transmission protocols and data formats are known, for example, as transmission control protocol/internet protocol (TCP/IP), hyper text transfer protocol (HTTP), secure HTTP, wireless application protocol, unique resource locator (URL), a unique resource identifier (URI), hyper text markup language HTML, extensible markup language (XML), extensible hyper text markup language (XHTML), wireless application markup language (WML), Standard Generalized Markup Language (SGML) etc. Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card.

Computer and program are closely related. As used hereinafter, phrases, such as "the computer provides" and "the program provides", are convenient abbreviation to express actions by a computer that is controlled by a program.

### Detailed Description of an Embodiment of the Invention

For convenience, the description starts with an introduction into terms:
"Compiler" is a convenient abbreviation for a computer processor (e.g., processor 910) executing compiler software (e.g., in memory 920). Compilers are well known in the art. The term "compiling" refers to the action of the compiler.
"Provide time" refers to the time when the computer-program-product (CPP) according to the present invention is provided. 3-digit-reference numbers start with 1. "Run-time" refers to the time when a compiled program product is being executed by a processor. 3-digit-reference numbers start with 2.

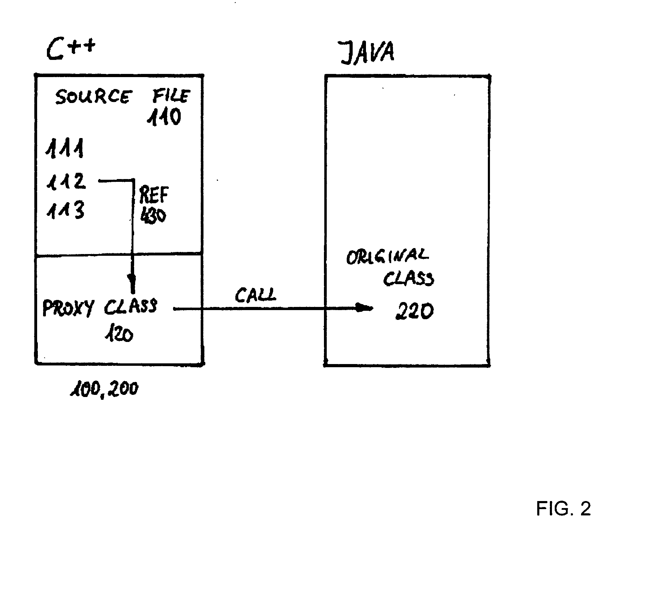

FIG. 2 illustrates an overview about code components 110 and 120 (C++, left side) of CPP 100 that are provided by the present invention (provide time). CPP 100 is provided for subsequent compiling. The compiled product - i.e. object code 200 - is adapted to call java class 220 (right side) during run-time.

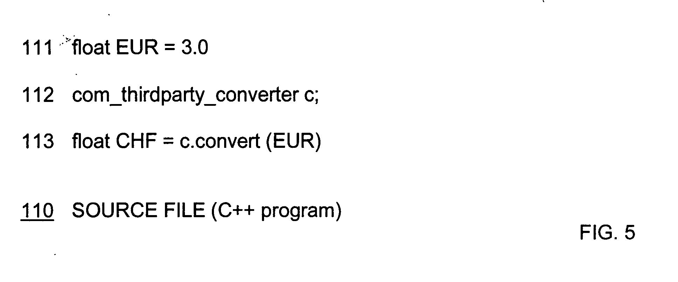

C++ source file 110 is explained by example in connection with FIG. 5 (lines 111-113). Preferably, file 110 is a combination of files with the well-known extensions ".h" and ".cpp".

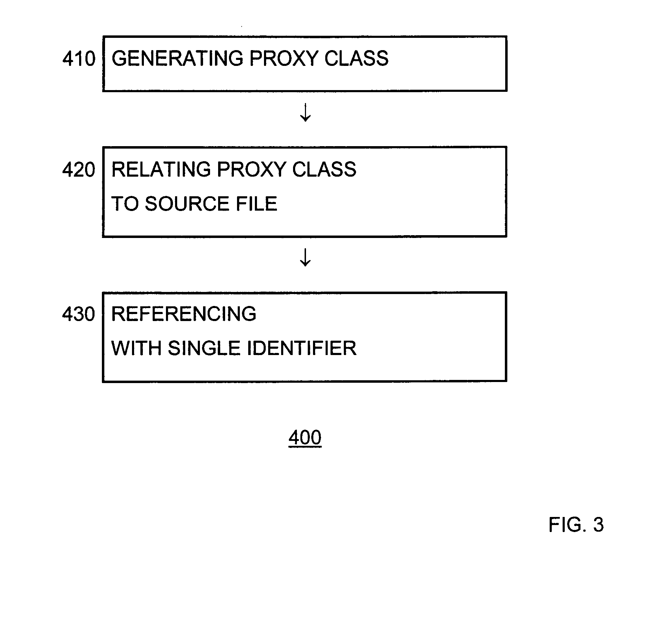

FIG. 3 illustrates a simplified flow chart of method 400 according to the present invention. Method 400 provides computer-program-product 100 (CPP) for subsequent compiling so that the compiled product (i.e. code 200) is adapted to call java class 220 (e.g., in byte code). Persons of skill in the art are able to provide a Java virtual machine (JVM) that supports the call at runtime. In step generating 410, C++ proxy class 120 is generated for java class 220. Generating 410 proxy classes for java classes is well known in the art. A useful reference is: "http:\\jnipp.sourceforge.net".

In step relating 420, C++ proxy class 120 is related to C++ source file 110, for example, by compiler settings. In other words, the compiler is enabled to access file 110 and class 120.

In step referencing 430, C++ proxy class 120 is referenced with a single identifier (cf. FIG. 5, line 112) in C++ source file 110.

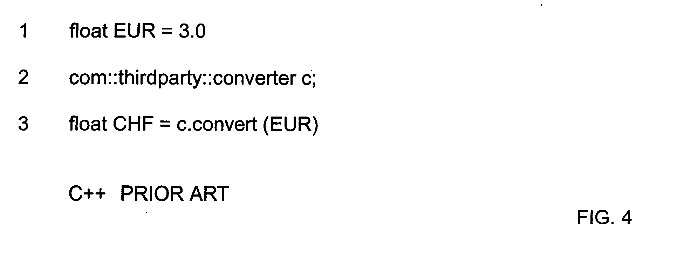

FIGS. 4-5 illustrate examples for source files. When source files (with related proxy class) are compiled, the object code is able to convert a first currency value (e.g., the real number "3.00") in a first currency (e.g., "EUR") to a second currency value (e.g., "4.00") in a second currency (e.g., "CHF"). In short: the EUR-value is converted to the CHF-value. Code lines are conveniently numbered 1-3 (FIG. 4) and 111-113 (FIG. 5). The code "float" stands for a real number; "thirdparty" identifies the manufacturer of a EUR-to-CHF-converter. Both programs control the compiler to provide object code. The term "convert" refers to a method of the instance "c" of the class "converter". "Converter c" is part of C++ proxy class 120. Actually converting the EUR-value to the CHF-value is performed by Java class 220 (during runtime).

FIG. 4 illustrates an example of a prior art C++ source file. As in line 1, the compiler provides code to receive the EUR-value. As in line 2, the compiler provides code to construct (i.e. to activate) a EUR-to-CHF converter instance using a C++ namespace identifier with a first portion "com", a second portion "thirdparty" and third portion "converter c". The compiler needs to understand a multi-portion namespace. As in line 3, the compiler provides code to send the EUR-value to the converter and to receive the CHF-value from the converter.

FIG. 5 illustrates an example of an inventive C++ source file 110. As in line 111, similar as above, the compiler provides code to receive the EUR-value. As in line 112, the compiler provides code to instantiate a EUR-to-CHF converter routine referenced by a single identifier. Preferably, identifier 112 is a single string (e.g., "com_thirdparty_converter c"). Underscoring is introduced only for convenience. It is an advantage that the compiler does not need to differentiate the multiple portions of a namespace. As in line 112, similar as above, processor 910 provides code to send the EUR-value to the routine and to receive the CHF-value from the routine.

In other words, the inventive approach replaces the namespace concept by single identifiers. This is not merely a modification in syntax (replacing "::" by underscore) but also a conceptual change. Older compilers can accommodate this approach (line 112), because the identifier counts as a single name. Persons of skill in the art are able to derive single identifier 112 from a namespace, by automatically applying predefined replacement rules. Adapting identification for java class 220 is applied accordingly.

### Reference numbers

- 100: computer-program-product
- 110: C++ source file
- 111-113, 1-3: code lines
- 112: single identifier
- 120: C++ proxy class
- 200: compiled product (object code)
- 220: java class
- 400: method
- 410: generating
- 420: relating
- 430: referencing
- 9xx: computer

## Claims

1. Method (400) for providing a computer-program-product (100) for subsequent compiling, wherein the compiled product (200) is adapted to call a java class (220), the method (400) comprising the following steps:
generating (410) a C++ proxy class (120) for the java class (220) ;
relating (420) the C++ proxy class (120) to a C++ source file (110); and
referencing (430) the C++ proxy class (120) with a single identifier (112) in the C++ source file (110).

2. The method of claim 1, wherein the single identifier (112) is a single string.

3. The method of claim 2, wherein in step referencing, the single identifier (112) is derived from a namespace.

4. Computer-program-product (100) with a plurality of instructions (110, 120) for controlling a processor (910) that operates with a compiler and that provides object code (200), wherein the object code (200) is able to call a java class (220),
the computer-program-product (100) comprising:
a C++ proxy class (120) that has been generated for the java class (220);
a C++ source file (110) that has been related (420) to the C++ proxy class (120); and
a single identifier (112) in the C++ source file (220) that references (430) to the C++ proxy class (120).

5. The computer-program-product (100) of claim 4, wherein the single identifier (112) is a single string.

6. The computer-program-product (100) of claim 4 being automatically provided by converting a conventional namespace identification (2) to the single identifier (112), and adding the single identifier (122) to the C++ proxy class (120) and to the C++ source file (110).

7. Computer system (999/900) for providing a computer-program-product (100) for subsequent compiling, wherein the compiled product (200) is adapted to call a java class (220), the system (999/900) comprising:
means to provide code for generating (410) a C++ proxy class (120) for the java class (220);
means to provide code for relating (420) the C++ proxy class (120) to a C++ source file (110); and
means to provide code for referencing (430) the C++ proxy class (120) with a single identifier (112) in the C++ source file (110).
